# EUROPÄISCHE PATENTSCHRIFT

(11) **EP 2 063 973 B1**
(45) Veröffentlichungstag und Bekanntmachung des Hinweises auf die Patenterteilung: **02.04.2014**
(21) Anmeldenummer: 07818054.4
(22) Anmeldetag: 05.09.2007
(51) Int. Cl.: B01D 29/11, B01D 35/14, C02F 1/00

(54) **WASSERFILTERVORRICHTUNG MIT VERSCHLÜSSELUNGSSTRUKTUR**
WATER FILTER DEVICE HAVING ENCODING STRUCTURE
DISPOSITIF DE FILTRATION DE L'EAU AVEC UNE STRUCTURE DE VERROUILLAGE

(30) Priorität: 20.09.2006 DE 102006044744
(43) Veröffentlichungstag der Anmeldung: 03.06.2009
(60) Teilanmeldung: 14000356.7
(73) Patentinhaber: Aquis Wasser-Luft-Systeme GmbH Lindau, Zweigniederlassung Rebstein, 9445 Rebstein (CH)
(72) Erfinder: WAWRLA, Andreas, 9443 Widnau (CH); SCHOLZ, Roland, CH-9436 Balgach (CH)
(74) Vertreter: Roth, Klaus
(86) Internationale Anmeldenummer: PCT/EP2007/007742
(87) Internationale Veröffentlichungsnummer: WO 2008/034523

(56) Entgegenhaltungen:
- EP-A- 0 442 365
- EP-A- 0 532 161
- EP-A- 1 693 098
- WO-A-01/80967
- WO-A-02/053258
- WO-A-2004/007374
- WO-A-2006/050114
- WO-A-2006/091557
- DE-A1- 19 958 648
- JP-A- 9 174 050
- US-A1- 2006 054 547

## Beschreibung

Die vorliegende Erfindung betrifft eine Wasserfiltervorrichtung nach dem Oberbegriff des Anspruchs 1.

### Stand der Technik:

Zur Trinkwasseraufbereitung in privaten Haushalten und in der Gastronomie ist die Verwendung von Wasserfiltern als zentrale oder dezentrale Installation für die Speisung von Entnahmestellen und im speziellen für die Speisung von modernen Küchengeräten, z.B. Kaffeemaschinen, Wasser-Zapfstellen und Eisbereiter (z. B. in modernen Kühlschränken), und darüber hinaus im kommerziellen Bereich zur Speisung von Getränkeautomaten zur Bereitung von Kalt- und Heissgetränken, von Geschirrspülmaschinen und Dampfgarern zum Zwecke der Geschmacksoptimierung der damit aufbereiteten oder hergestellten Getränke und Speisen und zum Schutz der Maschinen vor wasserbedingten technischen Problemen bekannt.

Im allgemeinen bestehen solche Wasserfiltervorrichtungen aus einem Filterkopf und ihm zugeordneten Filterkopfkomponenten sowie einer auswechselbaren Filterkerze mit ihr zugeordneten Filterkerzenkomponenten. Um eine Kombination von nicht zueinander passenden oder nicht für einander vorgesehenen Filterköpfen und Filterkerzen auszuschließen kann z.B. eine Verschlüsselung zwischen zwei solchen Einheiten vorgesehen sein.

Aus dem Stand der Technik gehen hierzu beispielweise die US 6,458,269 B1 und die US 6,949,189 B2 sowie die WO 01/80967 A1 und die WO 2006/050114 A1 hervor.

### Aufgabe und Lösung:

Der vorliegenden Erfindung liegt die Aufgabe zugrunde einen Wasserfilter entsprechend der einleitend dargelegten Art zu verbessern.

Gelöst wird diese Aufgabe durch den Anspruch 1. Durch die Unteransprüche werden weitere vorteilhafte und zweckmäßige Ausführungsformen angegeben.

Dementsprechend betrifft die vorliegende Erfindung einen Wasserfiltervorrichtung, bestehend aus einem Filterkopf mit Filterkopfkomponenten, einer auswechselbaren Filterkerze mit Filterkerzenkomponenten und einer zwischen einer Filterkopfkomponente und einer Filterkerzenkomponente ausgebildeten Verschlüsselungsstruktur. Sie zeichnet sich in einer ersten Ausführungsform dadurch aus, dass eine Verschlüsselungsstruktur an einer Stirnfläche der Filterkerze und/oder an einem einer solchen Stirnfläche der Filterkerze zugeordneten Element in axialer Ausrichtung ausgebildet ist, und dass der Bereich der Verschlüsselungsstruktur, von außen betrachtet, hinter einer Abdichtung für den Rohwasser-Zulaufbereich, also z.B. hinter einem entsprechenden O-Ring, ausgebildet ist.

Ein derartiger Aufbau bietet gegenüber dem bisher bekannten Stand der Technik eine deutlich größere konstruktive Freiheit. Ein weiterer Vorteil dieser Vorgehensweise liegt darin, dass eine entsprechend aufgebaute Filterkerze aufgrund der damit einhergehenden, geringeren radialen Ausdehnung weniger Platz benötigt und zugleich einfacher und leichter in den Kopf einzuführen ist. Auch hinsichtlich der Art und Weise der Befestigung der Filterkerze am Kopf ergeben sich durch eine derartige Ausführungsform in vorteilhafterweise deutlich mehr Freiheitsgrade. So sind z.B. für die Befestigung Mittel zum Spannen, Klipsen, Klemmen, gegebenenfalls Magnete und/oder dergleichen denkbar, die z.B. nicht nur in der Art wie eine Bajonettverbindung an einem äußeren Halsbereich der Filterkerze angeordnet sein müssen, sondern demgegenüber durchaus auch in einem stirnseitigen Bereich der Filterkerze angeordnet sein können, so dass sie im Inneren des Filterkopfs mit entsprechend komplementären Konturen zusammenwirken können. Denkbar sind aber auch den Filterkopf außen umgreifende Befestigungsmöglichkeiten.

Diese hier angeführten Vorteile gelten im Weiteren auch für eine zweite mögliche Ausführungsform der vorliegenden Erfindung, die sich dadurch auszeichnet, dass eine Verschlüsselungsstruktur getrennt von einer Fixierungsstruktur ausgebildet ist. Unter einer solchen Fixierstruktur werden die Elemente verstanden, die zur Festsetzung einer Filterkerze in einem entsprechenden Filterkopf vorgesehen sind, wie z.B. ein Bajonettverschluss oder dergleichen.

In beiden Ausführungsformen wird es als vorteilhaft angesehen, wenn die Verschlüsselungsstruktur als Verzahnung ausgebildet ist, insbesondere als axial ausgerichtete Verzahnung. Eine derartige Verzahnung bietet den Vorteil eines einfachen und zuverlässigen Ineinandergreifen zweier komplementärer Verschlüsselungsstrukturen, wobei gleichzeitig eine Vielzahl verschiedener Verschlüsselungsarten mit ein und demselben Verschlüsselungssystem durch die Kombination mehrer, voneinander unterschiedlicher, einzelner Verzahnungsstrukturen gegeben ist.

So kann die Verschlüsselungsstruktur beispielsweise eine Verzahnung mit in einer bestimmten Winkelbeziehung zueinander stehende Zähnen aufweisen. Beispielweise ist es möglich in einer Draufsicht auf eine solche stirnseitige Anordnung in einem gedachten Vollkreis eine bestimmte Anzahl von Zähnen in bestimmten Winkelsegmenten Anzuordnen. Durch die Ausrichtung eines oder mehrerer solcher Zähne, z.B. von der Filterkerze wegweisend bzw. zur Filterkerze hinweisend, also als Vertiefung an der Filterkerze und als Zahn an einem entsprechenden Filterkopfelement, kann bei gleichbleibender Anzahl und Position von Zähnen der betreffenden Verzahnungen der Verschlüsselungsstruktur eine weitere Variierung zur Unterscheidung gegenüber anderen Verschlüsselungsstrukturen mit einfachen Mitteln realisiert werden. Insbesondere sind bei solchen Aufbauten keine Hinterschneidungen in entsprechenden Spritzformen zur Herstellung der jeweiligen Komponente erforderlich und reduzieren den diesbezüglichen Aufwand in dieser Weise.

Neben einzeln, unterschiedlich ausgerichteten Verzahnungen, von der Filterkerze wegweisend, also mit der entsprechenden Aufnahmevertiefung an einem dem Filterkopf zugeordneten Filterkopfelement bzw. umgekehrt der Filterkerze zuweisend ausgerichtet, also der Zahn an einer Filterkopfkomponente ausgebildet und die entsprechend komplementäre Vertiefung an der Filterkerze, kann zur Erhöhung der Verschlüsselungsvariabilität auch eine kombinierte Ausrichtung von Zähnen der Verzahnung vorgesehen sein, bei der sowohl die von der Filterkartusche wegweisende als auch die zu ihr hinweisende Ausführungsform realisier ist. Für alle diese Ausführungsformen von Verschlüsselungsstrukturen gilt jedoch nach wie vor, dass sie axial zu einer Stirnfläche der Filterkerze ausgerichtet und/oder getrennt von einer Fixierstruktur ausgebildet sind.

Gleiches gilt auch für weitere hier vorgeschlagene Ausführungsformen, bei denen z.B. zu weiteren Vervielfachung einer Verschlüsselungsstruktur vorgeschlagen wird, dass eine unterschiedliche Länge und/oder Größe für verschiedene Zähne vorgesehen ist. Auch eine unterschiedliche Anzahl von Zähnen für verschiedene Verschlüsselungsausführungen ist zur Ausbildung unterschiedlicher Verschlüsselungsstrukturen gut geeignet. Auch für eine unterschiedlicher Anzahl von Zähnen in bestimmten Winkelsegmenten gilt dies.

Als insbesondere Vorteilhaft wird es im Weiteren angesehen, wenn die Verschlüsselungsstruktur als Stellelement für eine Filterkopfkomponente ausgebildet ist. Hierbei kann beispielsweise ein Zahn, durchaus aber auch mehrere Zähne, als entsprechendes Stellelement zum Eingriff in eine Komplementäre Ausnehmung vorgesehen sein, um beispielsweise einen Ventilkörper oder dergleichen zu betätigen, beispielsweise während des Vorgangs der Filterkerzenmontage bzw. der Filterkerzendemontage am Kopf. Bei einer gegebenenfalls dafür vorgesehenen Drehbewegung könnte beispielsweise der Zahn durch einen entsprechend vorgesehenen Eingriff den Ventilkörper bei der jeweiligen Drehbewegung von einer Geschlossenenstellung in eine Offenstellung bzw. wieder umgekehrt von einer Offenstellung in eine Geschlossenstellung für das jeweilige Ventil betätigen.

Bei einer gegebenenfalls vorgesehenen axialen Relativbewegung der Filterkerze zum Filterkopf zum Zwecke der Fixierung bzw. zur Demontage der Filterkerze an dem Filterkopf ist beispielsweise aber auch eine axiale Bewegung des Ventilkörpers zur Betätigung eines oder mehrerer darin ausgebildeter Ventile denkbar. Ein axiales Einschieben des Ventilkörper könnte beispielsweise gegen eine Federkraft oder dergleichen erfolgen. Der axiale Rückstellvorgang kann dann beispielsweise durch diese Federkraft veranlasst oder zumindest unterstützt erfolgen. Weitere Stell- und/oder Befestigungsmittel wären beispielsweise durch die Ausbildung entsprechender Schnapp- oder Klemmverbindungen vorstellbar.

Diese können bei entsprechender Positionierung des Ventilkörpers aktiviert bzw. deaktiviert werden, z.B. aufgrund eines durch eine entsprechend ausgebildete Gegen- und/oder Anschlagfläche aufgebauten Widerstandes gegen die durch die Montage bzw. Demontage der Filterkerze hervorgerufene Verschiebebewegung.

Eine weitere Betätigungsmöglichkeit für solch einen Ventilkörper könnte beispielweise durch die Kombination einer axialen und einer verdrehenden Bewegung sein, z.B. hervorgerufen durch zwei schräg gegeneinander verlaufende, vorzugsweise unter Vorspannung gegeneinander ausgerichtete Flächen. Damit könnte beispielsweise bei einer axialen Verschiebebewegung der Filterkerzen über zwei komplementäre, schräge Flächen eine Drehbewegung auf einen mit einer der beiden Schrägflächen versehenen und als Drehventil ausgebildeten Ventilkörper zur Aktivierung bzw. Deaktivierung eines oder mehrerer an diesem Ventilkörper ausgebildeten Ventile erfolgen.

An einem solchen Ventilkörper ausgebildete, mögliche Ventile wären beispielsweise ein Einlassventil, ein Auslassventil, ein Entspannungsventil, ein Spülventil oder aber auch ein Bypassventil und/oder eine Kombination einzelner oder mehrerer solcher Ventile. Das Einlassventil kann beispielsweise als Zulaufsteuerung für einen Rohwasserstrom in die Wasserfiltervorrichtung dienen, bei der beispielsweise sicher gestellt ist, dass nur dann Rohwasser in die Filtervorrichtung zugeführt wird, wenn genau die Filterkerze im Filterkopf eingefügt ist, für welche die entsprechende Verschlüsselung vorgesehen ist. Diese Zufuhr des Rohwasser wird durch Deaktivierung des Einlassventils sofort unterbrochen, wenn die Filterkerze aus dem Kopf entnommen wird. Eine ähnliche oder gleiche Steuerung kann auch für ein Auslassventil vorgesehen sein, so dass in einer gegebenenfalls nach oben führenden Ableitung der Wasserfiltervorrichtung sich befindliches, bereits gefiltertes Wasser nicht nach Entnahme der Filterkerze durch die entsprechende Auslassöffnung und den Kopf hindurch nach unten auslaufen kann.

Ein Entspannungsventil könnte beispielsweise die Funktion haben, dass beim Öffnen des Verbindüngsmechanismus zwischen der Filterkerze und dem Filterkopf ein Abbau des im Inneren der Wasserfiltervorrichtung vorherrschenden Wasserdrucks durch kurzzeitiges Öffnen dieses Entspannungsventils ermöglicht wird. Vorzugsweise wird diese in der Regel geringe Wassermenge über eine speziell dafür vorgesehene Leitung an eine entsprechend geeignete Stelle geleitet. Besonders vorteilhaft kann es sich hierbei um eine Leitung handeln, die mit einem gegebenenfalls zusätzlichen vorhandenen Spülventil zur Spülung der Filterkerze bei deren erstem Einsetzen in den Filterkopf verbunden ist.

In einer besonders bevorzugten Ausführungsform können das Entspannungsventil und das Spülventil sogar durch ein einziges Ventil realisiert sein, welches durch eine entsprechende Ansteuerung während des Montage- bzw. Demontagevorgangs für die Durchführung des betreffenden Vorgangs sorgt.

Bei der Montage der Filterkerze kann hierzu beispielsweise eine längere Offenstellung dieses Ventils vorgesehen sein, so dass eine verhältnismässig große Menge an zugeführten Rohwasser durch die Filterkerze durchgespült und über das Spülventil am Auslass vorbeigeleitet wieder über die zuvor genannten Ableitung abgelassen wird. Besonders günstig ist es hierbei wenn das Auslassventil für diesen Steuerzeitpunkt bzw. für diese Steuerposition der Filterkerze geschlossen ist, so dass eine zwangsweise Ausleitung über das Spülventil erfolgt.

Für das Entspannen des im Inneren der Wasserfiltervorrichtung vorherrschenden Wasserdrucks bei der Entnahme der Filterkerze, beispielsweise nach deren Verbrauch, reicht hingegen ein kurzer Impuls zum Öffnen und ein damit einhergehender Abbau des darin vorherrschenden Wasserdrucks, z.B. gesteuert durch eine entsprechend ausgebildete Steuernocke. Aber auch für die Steuerung des Spülventils kann eine Steuernocke vorgesehen sein, dieses sollte jedoch einen entsprechend längeren Verlauf für die Ansteuerung des Ventils aufweisen, so dass diese Nocke gegebenenfalls auch als Steuerkurve bezeichnet werden kann.

Das Bypassventil könnte beispielsweise zum Anschluss einer weiteren Wasserfiltervorrichtung an diese erste Wasserfiltervorrichtung vorgesehen sein. Seine Ansteuerung könnte beispielsweise ebenfalls durch die Montage bzw. Demontage der Filterkerze in dem Sinne erfolgen, dass bei Demontage der Filterkerze für die erste Wasserfiltervorrichtung das Bypassventil zur Versorgung der an das Bypassventil angeschlossenen, zweiten Wasserfilterversorgung dient bzw. im umgekehrter Weise, beim Einsatz einer Filterkerze gegebenenfalls wiederum eine Unterbrechung der Wasserversorgung durch dieses Bypassventil bewirkt wird.

Denkbar ist aber auch eine andere und/oder zusätzliche Freigabe dieses Bypassventils, beispielsweise durch einen getrennt zu betätigenden Verstellmechanismus, der ein Umschalten zwischen dieser Wasserfiltervorrichtung und einer an das Bypassventil angeschlossen ermöglicht, um z.B. eine Weiterversorgung eines an die Wasserfiltervorrichtungen angeschlossenen Verbrauchers trotz Entnahme einer Filterkerze aus einer der beiden Wasserfiltervorrichtungen sicherzustellen.

Als weiter vorteilhaft wird es angesehen, wenn eine Einstellvorrichtung zur Einstellung eines Teilstromverhältnisses zwischen mindestens zwei Strömungspfaden eines Rohwasserstroms vorgesehen ist, wobei insbesondere bevorzugt wenigstens ein Strömungspfad eine Filterstrecke umfasst. Eine solche Wasserfiltervorrichtung kann z.B. Enthärtungs-/ Entkarbonisierungs- / Entmineralisierungs- System auf Basis von Austausch- Filterkerzen, beinhalten, und gegebenenfalls zur Einstellung einer für die jeweilige Anwendung vorbestimmten Wasserqualität eine Verschnitteinrichtung zum Zwecke der abgestimmten Mischung von über die Filterstrecke aufbereitetem Wasser mit nicht filtriertem oder über ein anderes Wasseraufbereitungsmedium geleitetem Wasser dienen.

Eine besonders elegante Einflussnamemöglichkeit ist dann gegeben, wenn die Einstellvorrichtung ein Rohwasser-Verteilungselement und ein dazu komplementärer Teilstrom-Kanälführungselement umfasst. Das Rohwasser-Verteilungselement kann hierbei beispielweise als Ring oder Scheibe aufgebaut sein, mit darin angeordneten Ausnehmungen und/oder Abdeckungen für die Einflussnahme auf die Durchleitung eines entsprechenden Rohwasserstroms. Das komplementäre Teilstrom-Kanalführungselement kann beispielsweise Zugangsöffnungen zu entsprechenden Rohwasserstrom-Zuleitungen für verschiedene Wasserstrecken umfassen, wie z.B. für eine Filterstrecke zur Filtrierung des Rohwasserstroms, für eine Bypassstrecke zur Beimengung von nicht oder anderweitig aufbereitetem Wasser zum Filtratstrom, für eine Wasserstrecke zu einem gegebenenfalls vorgesehen weiteren Wasserfilter und/oder dergleichen mehr.

Vorzugsweise ist das Teilstrom-Kanalführungselement hierzu in bzw. an der Filterkartusche angeordnet bzw. ausgebildet. Das Rohwasserverteilungselement ist wiederum vorzugsweise im bzw. am Filterkopf angeordnet, so dass die Einstellvorrichtung aus zwei komplementären Elementen besteht, von welchen jeweils eines der Filterkerze und eines dem Filterkopf in Manipulationsmöglichkeiten reduzierender Weise zugeordnet ist.

In einer demgegenüber abgewandelten Ausführungsform kann das Rohwasser-Verteilungselement jedoch auch der Filterkerze zugeordnet sein, so dass es einem Filterkerzen-Austauschsatz zugehörig ist. Für beide Ausführungsformen ist es jedoch möglich, dass das Rohwasser-Verteilungselement als Wechselelement ausgebildet ist, um beispielsweise ein möglichst offenes Wasserfiltervorrichtungssystem zur Verfügung zu stellen. Damit ist es beispielsweise möglich für verschiedene Anwendungsfälle verschiedene Wasseraufbereitung zu realisieren, gegebenenfalls durch Verwendung von verschieden aufgebauten Filterkerzen oder auch durch unterschiedliche Ansteuerung, insbesondere durch eine unterschiedliche Beaufschlagung einzelner Teilströme.

Eine Einflussnahme auf die Teilstromeinstellung kann beispielsweise durch eine im Filterkopf vorgesehene Positioniereinheit für das Rohwasser-Verteilungselement erfolgen, die insbesondere vorteilhaft aritierbar ausgebildet ist, z.B. um eine unbeabsichtigte Verstellung der Rohwasseraufteilung während des Betriebs des Filters auszuschließen.

Ein weiterer Vorteil einer solchen Aritierung liegt darin, dass dadurch über die Positioniereinheit eine Verstellmöglichkeit der Rohwasserstromaufteilung auch während des Betriebs der Filterkerze möglich ist, und zwar sowohl hinsichtlich einer möglichen Erhöhung des prozentualen Durchflusses z.B. zur Filterstrecke und einer damit gegebenenfalls einhergehenden Reduzierung des Durchflusses zu einer Bypassstrecke bzw. umgekehrt, um vorzugsweise den Innendruck im Filtersystem im Wesentlichen unabhängig von einer solchen Verschnitteinstellung halten zu können.

In einer demgegenüber einfacheren Ausführungsform ist es jedoch auch denkbar, dass lediglich die Beeinflussung einer der oben beispielhaft dargelegten Teilströme zur Beeinflussung eines bestimmten Mischungsverhältnis zwischen Filtratstrom und Bypassstrom und/oder eines gegebenenfalls vorgesehen, weiteren Wasserstroms erfolgt.

Demnach ist der vom Rohwasser-Verteilungselement wirksam freigegebene, aus der Summe der beiden Teilströme gebildete Gesamtquerschnitt des Teilstrom-Kanalführungselementes, je nach Ausführungsform, im Wesentlichen in allen Verschnitteinstellungen gleich groß bzw. in unterschiedlichen Verschnitteinstellungen unterschiedlich groß.

### Ausführungsbeispiel:

Die vorliegende Erfindung wird nachfolgend anhand der beigefügten Figuren und der darauf bezugnehmenden Beschreibung näher erläutert. Es zeigen:
- Figur 1: schematisch eine perspektivische Draufsicht auf eine beispielhafte, explosionsartige Darstellung einer Wasserfiltervorrichtung mit einem Verschlüsselungselement,
- Figur 2: eine vergrößerte Darstellung eines Ausschnittes aus der Figur 1,
- Figuren 3 bis 5: weitere beispielhafte, schematische Ansichten einzelner Elemente der Wasserfiltervorrichtung nach den vorhergehenden Figuren und
- Figuren 6 und 7: zwei weitere, beispielhafte Draufsichten auf eine Filterkerze, mit und ohne Rohwasser-Verteilungselement.

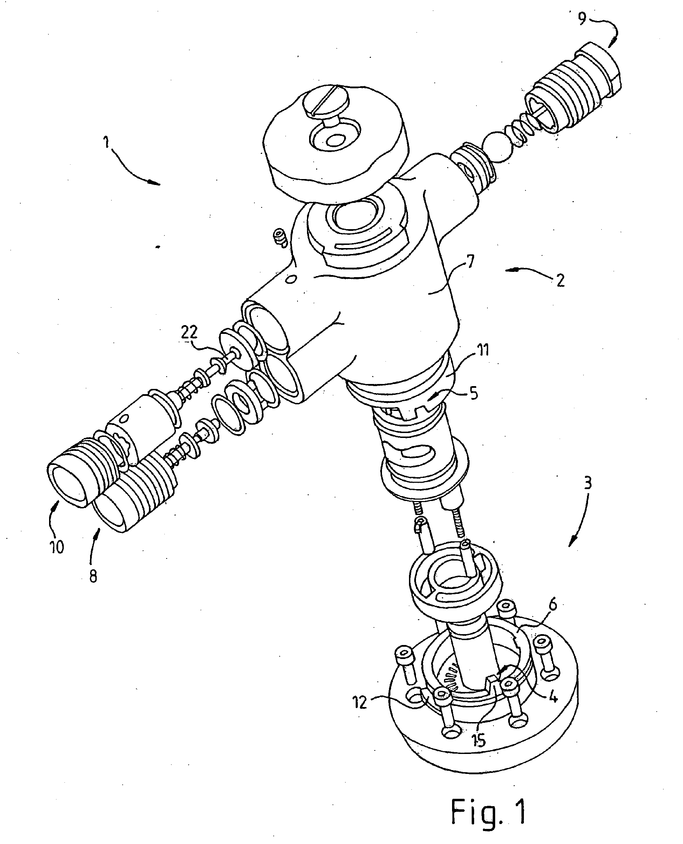

Die Fig. 1 zeigt demnach beispielhaft eine perspektivische Draufsicht auf eine Wasserfiltervorrichtung 1 mit einem Filterkopf 2 und einer auswechselbaren Filterkerze 3. Der Filterkopf besteht aus mehreren Filterkopfkomponenten, dem Gehäuse 7, einem Einlassventil 8, einem Auslassventil 9, sowie einem Entspannungs- und/oder Spülventil 10 sowie eine Verschlüsselungsstruktur 5. Eine komplementäre Verschlüsselungsstruktur 4 ist der Filterkerze zugeordnete. Diese Verschlüsselungsstrukturen 4, 5 sind dafür vorgesehen, dass nur zulässige Kombinationen von Filterköpfen und Filterkerzen möglich sind.

Hierzu ist es vorgesehen, dass die Verschlüsselungsstruktur 4 an der Stirnfläche 6 der Filterkerze 3 in axialer Richtung ausgebildet ist. Hier im vorliegenden Ausführungsbeispiel stellt diese Verschlüsselungsstruktur 4 beispielhaft einen Zahn dar, der in eine entsprechende komplementäre Ausnehmung 5 an einer Filterkopfkomponente 11 eingreift. Nur wenn das der Filterkerze 3 zugeordnete Element der Verschlüsselungsstruktur 4, mit dem der Filterkopfkomponente 11 zugeordneten Verschlüsselungsstruktur 5 zusammenpasst, kann die betreffende Filterkerze in den Filterkopf montiert werden.

Neben dieser Ausführungsform ist eine gegebenenfalls dahingehend abgewandelte Ausführungsform vorstellbar, bei der an einem der Stirnfläche 6 zugeordneten Element ebenfalls in axialer Ausrichtung die Verschlüsselungsstruktur 4 ausgebildet ist. Ein solches Element könnte beispielsweise ein auf die Stirnfläche 6 aufzulegender Ring, eine Scheibe oder dergleichen mehr sein, die eine entsprechende Verbindung mit der Filterkerze zur Realisierung einer derartigen Verschlüsselungsstruktur bzw. deren Funktion geeignet ist. Eine mögliche Verbindung zwischen einen solchen Filterkerzenelement und der Filterkerze wäre beispielsweise eine Verschraubung, eine Verklebung, ein Clips und/oder Schnappverschluss oder dergleichen mehr.

Grundsätzlich denkbar wäre durchaus aber auch ein solches Zwischenelement in Verbindung mit dem Filterkopf, ebenfalls mit einer entsprechenden mechanischen Verbindung.

Als weiteres wesentliches Merkmal ist eine Trennung zwischen der Verschlüsselungsstruktur 4,5 und der Fixierstruktur 12 für die Befestigung der Filterkerze 3 am Filterkopf 2 vorgesehen. Die Fixierstruktur 12 ist hier in der Form eines Bajonettverschlusses 12 ausgebildet, welcher beim Einfügen der Filterkerze in den Kopf 2 mit dem Gehäuse 7 eine entsprechende Verbindung eingeht, so dass im fixierten Zustand der Filterkerze 3 der Kopf und die Kerze eine entsprechende Wasserfiltervorrichtung 1 ausbilden.

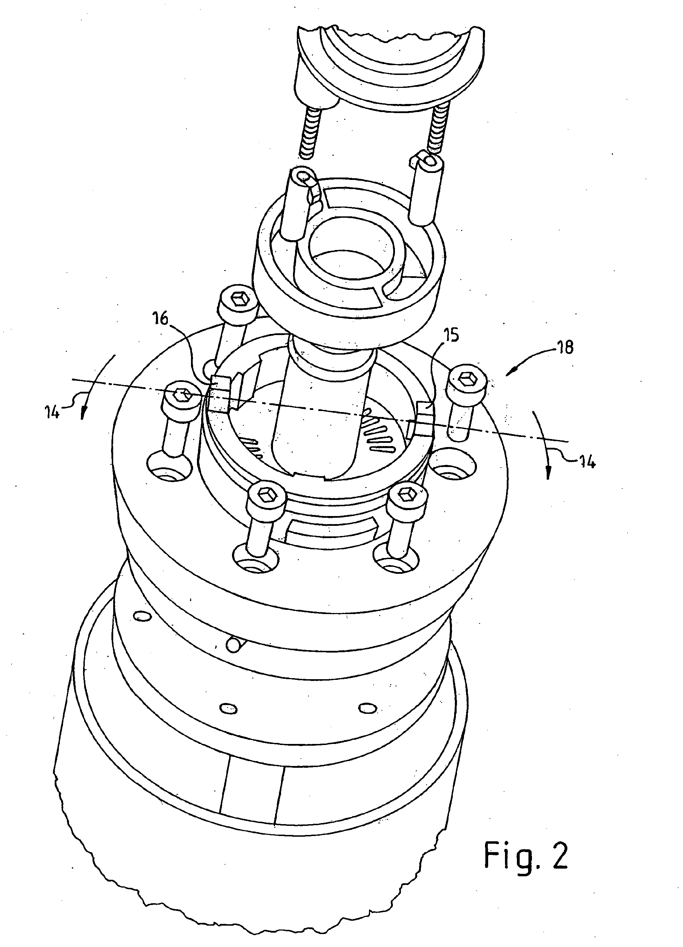

Die beiden Verschlüsselungsstrukturen 4, 5 bilden somit eine Verzahnung aus, bei der bei Anordnung mehrerer Zähne diese in einer bestimmten Winkelbeziehung 14 zu einander stehen, wie z. B. dargestellt in der Figur 2, mit einem Versatz von 180°. In den Darstellungen der Figuren 1 bis 3 weist der Zahn 5 eine von der Filterkerze 3 wegweisende Ausbildung 4 auf, die in eine komplementäre Ausnehmung 5 der Filterkopfkomponente 11 eingreift. In einer demgegenüber abgewandelten, jedoch nicht beispielhaft dargestellten Ausführungsform ist es aber auch denkbar, dass ein Zahn 15 der Verzahnung z. B. an einer Filterkopfkomponente 11 ausgebildet und zur Filterkerze 3 hinweisend in eine entsprechend komplementäre Ausnehmung eingreift. Auch eine kombinierte Ausbildung solch unterschiedlich ausgerichteter Zähne von der Filterkerze 13 wegweisend bzw. zur Filterkerze 3 hinweisend, ist möglich und erweitert das mögliche Spektrum von Verschlüsselungen.

Eine weitere diesbezügliche Ergänzung kann beispielsweise durch radialen Versatz einzelner oder mehrerer Zähne zueinander, jedoch immer in axialer Ausrichtung zu einer Stirnfläche 6 der Filterkerze 3, realisiert werden. Durch diese axiale Ausrichtung der Verschlüsselungsstrukturen 4, 5 in Bezug auf eine Stirnfläche 6 der Filterkerze 3 können beispielsweise kleinere Bauform realisiert werden, da ansonsten außen radial an der Filterkerze bzw. an deren Hals erforderliche Strukturen entfallen können.

Ein weiterer Vorteil einer derartigen Ausführungsform wird in einer einfacheren und leichteren Einführbarkeit der Filterkerze aufgrund kleinerer bzw. kompakterer Strukturen gesehen. Zusätzlich ist es möglich, die Verschlüsselungsstruktur innerhalb des Dichtbereichs, hinter einer entsprechenden Rohwasserzuflussdichtung anzuordnen, die beispielsweise in der Form eines O-Rings 17 realisiert ist, was insbesondere auch auf die getrennte Ausbildung der Fixierstruktur 12 und der Verschlüsselungsstrukturen 4, 5 zurückzuführen ist.

Eine zusätzliche Erweiterung der Verschlüsselungsmöglichkeiten besteht durch die unterschiedliche Ausbildung der Zähne hinsichtlich ihrer Länge und/oder ihrer Größe, aber auch hinsichtlich einer unterschiedlichen Anordnung und Anzahl von Zähnen, wie sie hier beispielhaft durch die beiden Zähne 15, 16 in der Figur 2 dargestellt sind. In einer demgegenüber abgewandelten Ausführungsform könnten beispielsweise aber auch 3, 4 oder eine andere beliebige Anzahl von auf der Stirnseite 6 des Filters 3 anordbaren Zähnen vorgesehen sein. In der Darstellung der Figur 2 ist das Winkelsegment 18 hier beispielhaft nur mit einem einzigen Zahn bestückt. In einer davon abweichenden Ausführungsform können es durchaus aber auch mehr sein.

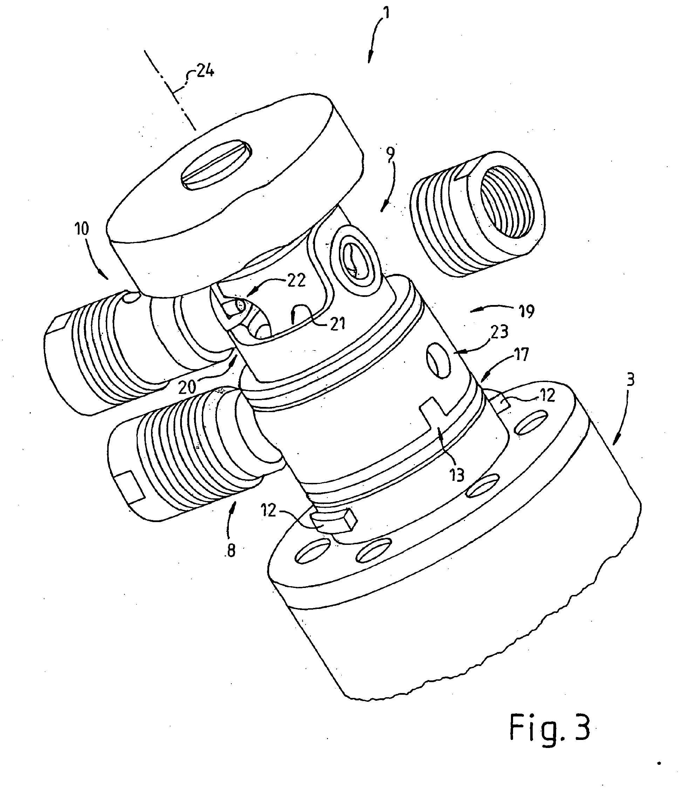

Im Weiteren wird es als besonders bevorzugt angesehen, wenn die Verschlüsselungsstruktur 4, 5 als Stellelement für eine Filterkopfkomponente 11, z. B. in der Form eines Ventilkörpers 9, wie in der Figur 3 dargestellt, ausgebildet wird. Dieser Ventilkörper 19 in der Figur 3 unterscheidet sich von der Ausführungsform in dem Ventilkörper in der Figur 1 dahingehend, dass er als Drehventilkörper ausgebildet ist. Die in der Figur 1 gezeigten Ventilkörper sind demgegenüber beispielhaft als Stößelventile dargestellt.

In der Darstellung der Figur 3 ist ein Einlassventil 8 und ein Auslassventil 9 beispielhaft am Ventilkörper 19 ausgebildet dargestellt. Eine weitere mögliche Anordnung eines Ventils an diesem Ventilkörper 19 ist durch das Entspannungsventil 10 und/oder das Spülventil 10 gezeigt, welches hier im vorliegenden Fall in einem einzigen Ventil realisiert ist.

Das Einlassventil dient zur Steuerung des Rohwasserzuflusses, das Auslassventil zur Steuerung des Filtratstromes. Das Entspannungsventil dient zur Reduzierung des im Inneren der Wasserfiltervorrichtung vorherrschenden Drucks vor der Entnahme der Filteraustauschkerze, vorzugsweise über eine entsprechend dafür vorgesehene Leitung (hier nicht dargestellt). Das gleichzeitig hiermit realisierte Spülventil 10 dient zur Spülung des Wechselfilters bei dessen Einsatz in den Filterkopf, so dass gegebenenfalls darin vorhandene Verunreinigungen ausgespült und ebenfalls über diese Ablassleitung entsorgt werden können.

Zur Steuerung des Entspannungsventils 10 bzw. des Spülventils 10 kann der Ventilkörper 19 eine Steuerkurve 21 bzw. eine Steuernocke 20 umfassen, die für eine entsprechende Ansteuerung des betreffenden Ventils zum jeweiligen Betätigungszeitpunkt bzw. zur jeweiligen relativen Positionierungsstellung der Austauschfilterkerze 3 zum Filterkopf 2 betätigt wird.

In der Darstellung der Figur 3 ist hierzu ein Ventilstößel 22 gezeigt, welcher aus Gründen der Vereinfachung auch in der Figur 1 mit der Nummer 22 bezeichnet ist. Die Funktionsweise des in der Figur 1 gezeigten Entspannungsventils bzw. Spülventils 10 ist sinngemäß die gleiche wie die des in der Figur 3 gezeigten Ventils 10. Es handelt sich hierbei also abweichend vom Einlass bzw. Auslassventil nicht um ein Drehventil, sondern um ein kurven- und/oder nockenbetätigtes Stößelventil. Dieses kann je nach gewünschter Funktion verhältnismäßig kurz angesteuert bzw. zu dessen Funktion betätigt werden.

Sofern gewünscht, kann der Ventilkörper 19 beispielsweise auch mit einem weiteren Ventil 23 versehen sein, beispielsweise in der Form eines Bypassventils, z.B. um einen entsprechenden Anschluss für eine weitere Einheit zur Verfügung stellen zu können. Eine solche weitere Einheit könnte beispielsweise eine zusätzliche Wasserfiltervorrichtung sein, die gegebenenfalls parallel zu dieser Wasserfiltervorrichtung geschaltet sein kann, um gegebenenfalls ein Umschalten auf eine zweite Wasserfiltervorrichtung zu ermöglichen, wenn die Filterkerze des ersten Wasserfilters erschöpft sein sollte. Zusätzlich gut sichtbar in der Figur 3 ist die getrennte Ausbildung der Verschlüsselungsstruktur 4, 5 von der Fixierstruktur 12, die hier in der Form eines Bajonettverschlusses dargestellt ist.

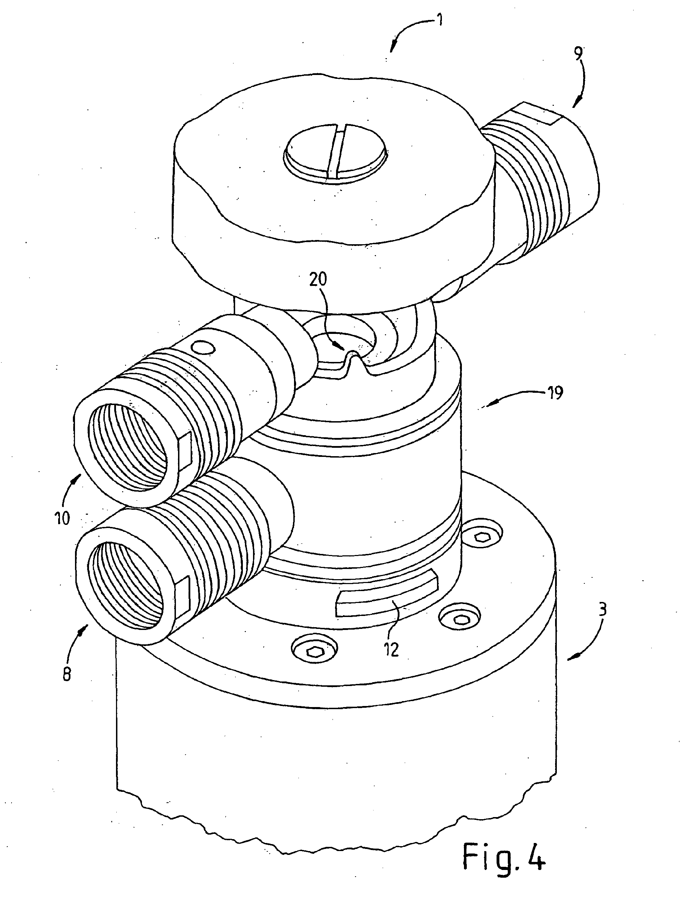

Die Figur 4 zeigt demgegenüber eine entlang einer Längsachse 24 gedrehte Darstellung der gleichen Elemente der Wasserfiltervorrichtung 1. Besonders gut zu erkennen ist hierin die Steuernocke 20 zur Ansteuerung des Entspannungsventils 10 bzw. des Spülventils 10.

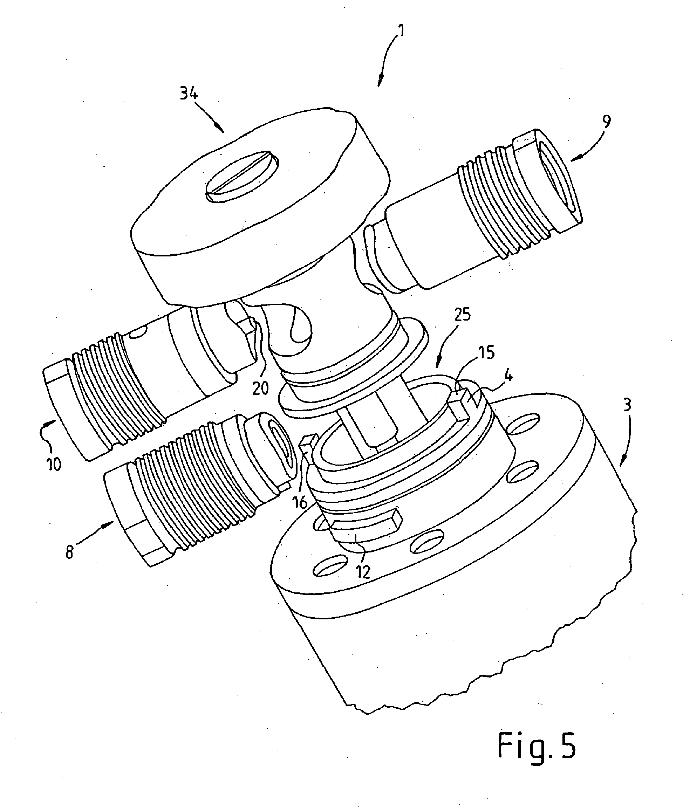

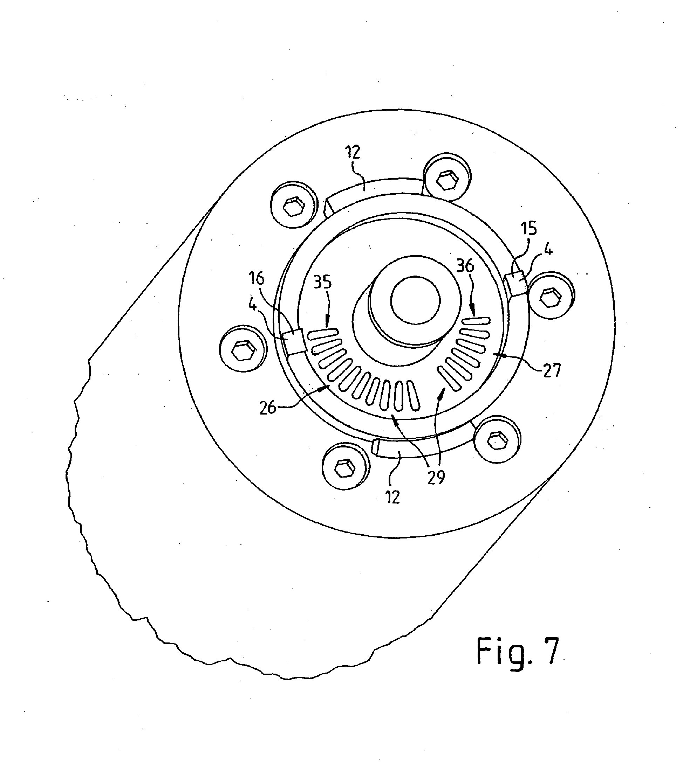

Die Figur 5 zeigt wiederum eine weitere Darstellung einer Wasserfiltervorrichtung, jedoch ohne Ventilkörper 19, um weitere, ansonsten durch den Ventilkörper verdeckte Elemente darstellen zu können. Ein solches weiteres Element der Wasserfiltervorrichtung 1 ist eine Einstellvorrichtung 25 zur Einstellung eines Teilstromverhältnisses zwischen mindestens zwei Strömungsfaden 26, 27 (Figur 7) eines der Wasserfiltervorrichtung 1 durch das Einlassventil 8 zugeführten Rohwasserstromes. Der Strömungspfad 26 wird hierbei durch die Filterstrecke der Austauschfilterkerze 3 geführt. Der Strömungspfad 27 wird über eine sogenannte Bypassstrecke oder Verschnittstrecke geführt, um den durch den Strömungspfad 26 versorgten Filtratstrom der Wasserfiltervorrichtung 1 verschneiden bzw. aufbereiten zu können.

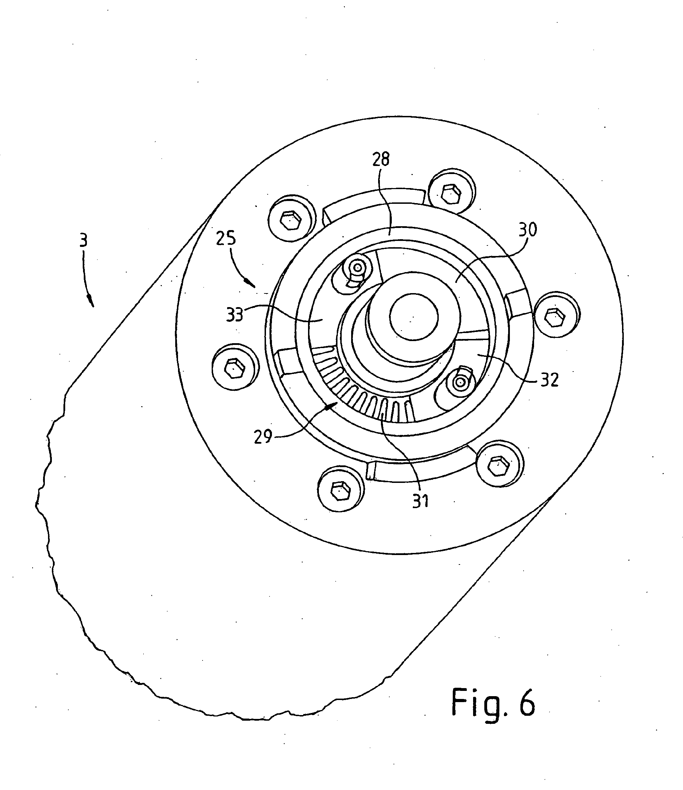

Entsprechend der Darstellung in der Figur 6 umfasst die Einstellvorrichtung 25 ein Rohwasser-Verteilungselement 28 und ein dazu komplementäres Teilstrom-Kanalführungselement 29, was am Besten aus der Darstellung der Figur 7 ersichtlich ist. Das Teilstrom-Kanalführungselement 29 umfasst hierbei die beiden Eingangsöffnungen 35, 36 für die beiden Teilstromstrecken, Filterstrecke 26 bzw. Bypassstrecke 27, als der Filterkartusche 3 zugeordnete Elemente.

Das Rohwasser-Verteilungselement 28 ist hier beispielhaft ringförmig ausgebildet, weist segmentartige Abschnitte mit Ausnehmungen 30, 31 und Abdeckungen 32, 33 auf, die zur Steuerung des über das Einlassventil zugeführten Rohwasserstromes die beiden Strömungspfade 26, 27, je nach relativer Winkelstellung zueinander mehr oder weniger überdeckt bzw. freigibt. Damit ist eine Steuerung der durch diese Wasserfiltervorrichtung 1 aufbereiteten Wasserqualität über das Verhältnis zwischen Filtratstrom und Bypassstrom, z.B. durch Betätigung eines dafür vorgesehenen Stellrades 34 möglich.

Je nach Ausführungsform können das Rohwasser-Verteilungselement 28 und das Teilstrom-Kanalführungselement 29 so zueinander ausgebildet bzw. verstellbar sein, dass entweder ein im Wesentlichen in allen Verschnitteinstellungen gleich großer Gesamtquerschnitt aus der Summe der beiden Teilströme gebildet wird bzw. in einer anderen Ausführungsform eine je nach Einstellung unterschiedlich großer Gesamtquerschnitt der angesteuerten Teilströme. Bei überwiegend gleichbleibenden Gesamtquerschnitt bleibt auch der Innendruck in der Wasserfiltervorrichtung im Wesentlichen in allen Verschnitteinrichtungen gleich groß, so dass sich damit auch eine möglichst gleichmäßige Filterwirkung über den gesamten Einstellbereich ergibt.

**Bezugszeichenliste:**

| | | | |
|---|---|---|---|
| 1 | Wasserfiltervorrichtung | 35 | Öffnung |
| 2 | Filterkopf | 36 | Öffnung |
| 3 | Filterkerze | | |
| 4 | Verschlüsselungsstruktur | | |
| 5 | Verschlüsselungsstruktur | | |
| 6 | Stirnfläche | | |
| 7 | Gehäuse | | |
| 8 | Ventil | | |
| 9 | Ventil | | |
| 10 | Ventil | | |
| 11 | Filterkopfkomponente | | |
| 12 | Fixierstruktur | | |
| 13 | Verzahnung | | |
| 14 | Winkelbeziehung | | |
| 15 | Zahn | | |
| 16 | Zahn | | |
| 17 | Dichtung | | |
| 18 | Winkelsegment | | |
| 19 | Ventilkörper | | |
| 20 | Steuernocke | | |
| 21 | Steuerkurve | | |
| 22 | Stößel | | |
| 23 | Bypassventil | | |
| 24 | Achse | | |
| 25 | Einstellvorrichtung | | |
| 26 | Strömungspfad | | |
| 27 | Strömungspfad | | |
| 28 | Rohwasser-Verteilungselement | | |
| 29 | Teilstrom-Kanalführungselement | | |
| 30 | Ausnehmung | | |
| 31 | Ausnehmung | | |
| 32 | Abdeckung | | |
| 33 | Abdeckung | | |
| 34 | Stellrad | | |

## Patentansprüche

1. Wasserfiltervorrichtung (1), bestehend aus einem Filterkopf (2) mit Filterkopfkomponenten (11), einer auswechselbaren Filterkerze (3) mit Filterkerzenkomponenten und einer zwischen einer Filterkopfkomponente und einer Filterkerzenkomponente ausgebildeten Verschlüsselungsstruktur (4, 5), **dadurch gekennzeichnet, dass** eine Verschlüsselungsstruktur (4) an einer Stirnfläche (6) der Filterkerze (3) und/oder an einem einer solchen Stirnfläche (6) der Filterkerze (3) zugeordneten Element in axialer Ausrichtung ausgebildet und der Bereich der Verschlüsselungsstruktur , von außen betrachtet, hinter einer Ab- dichtung für den Rohwasser-Zulaufbereich ausgebildet ist.

2. Wasserfiltervorrichtung nach Anspruch 1, **dadurch gekennzeichnet, dass** eine Verschlüsselungsstruktur (4, 5) getrennt von einer Fixierungsstruktur (12) ausgebildet ist.

3. Wasserfiltervorrichtung nach Anspruch 1 oder 2, **dadurch gekennzeichnet, dass** die Verschlüsselungsstruktur (4, 5) als axiale Verzahnung (12) ausgebildet ist.

4. Wasserfiltervorrichtung nach einem der vorangehenden Ansprüche, **dadurch gekennzeichnet, dass** die Verzahnung (13) in einer bestimmten Winkelbeziehung (14) zueinander stehende Zähne (15, 16) aufweist.

5. Wasserfiltervorrichtung nach einem der vorangehenden Ansprüche, **dadurch gekennzeichnet, dass** eine kombinierte Ausrichtung von Zähnen der Verzahnung (13) vorgesehen ist, von der Filterkerze (3) wegweisend und zur Filterkerze (3) hinweisend.

6. Wasserfiltervorrichtung nach einem der vorangehenden Ansprüche, **dadurch gekennzeichnet, dass** eine unterschiedliche Länge und/oder Größe für verschiedene Zähne (15, 16) vorgesehen ist.

7. Wasserfiltervorrichtung nach einem der vorangehenden Ansprüche, **dadurch gekennzeichnet, dass** eine unterschiedliche Anzahl von Zähnen für verschiedene Verschlüsselungsausführungen vorgesehen ist.

8. Wasserfiltervorrichtung nach einem der vorangehenden Ansprüche, **dadurch gekennzeichnet, dass** eine unterschiedliche Anzahl von Zähnen in einem bestimmten Winkelsegment (18) für verschiedene Verschlüsselungsausführungen vorgesehen ist.

9. Wasserfiltervorrichtung nach einem der vorangehenden Ansprüche, **dadurch gekennzeichnet, dass** die Verschlüsselungsstruktur (4, 5) als Stellelement für eine Filterkopfkomponente (11) ausgebildet ist.

10. Wasserfiltervorrichtung nach einem der vorangehenden Ansprüche, **dadurch gekennzeichnet, dass** die Filterkopfkomponente (11) einen Ventilkörper (19) umfasst.

11. Wasserfiltervorrichtung nach einem der vorangehenden Ansprüche, **dadurch gekennzeichnet, dass** der Ventilkörper (19) mindestens ein Einlassventil (8) und/oder ein Auslassventil (9) umfasst.

12. Wasserfiltervorrichtung nach einem der vorangehenden Ansprüche, **dadurch gekennzeichnet, dass** der Ventilkörper (19) ein Entspannungsventil (10) und/oder ein Spülventil (10) umfasst.

13. Wasserfiltervorrichtung nach einem der vorangehenden Ansprüche, **dadurch gekennzeichnet, dass** der Ventilkörper (19) eine Steuerkurve (21) und/oder eine Steuernocke (22) für ein Entspannungsventil (10) und/oder ein Spülventil (10) aufweist.

14. Wasserfiltervorrichtung nach einem der vorangehenden Ansprüche, **dadurch gekennzeichnet, dass** der Ventilkörper (19) ein Bypassventil (23) umfasst.

15. Wasserfiltervorrichtung nach einem der vorangehenden Ansprüche, **dadurch gekennzeichnet, dass** eine Einstellvorrichtung (25) zur Einstellung eines Teilstromverhältnisses zwischen mindestens zwei Strömungspfaden (26, 27) eines Rohwasserstromes vorgesehen ist.

16. Wasserfiltervorrichtung nach einem der vorangehenden Ansprüche, **dadurch gekennzeichnet, dass** die Einstellvorrichtung (25) ein Rohwasser-Verteilungselement (28) und ein dazu komplementäres Teilstrom-Kanalführungselement (29) umfasst.

## Claims

1. A water filter device (1), consisting of a filter head (2) having filter head components (11), an Interchangeable filter candle (3) having filter candle components, and a keying structure (4, 5) formed between a filter head component and a filter candle component, **characterized in that** a keying structure (4) is formed on an end face (6) of the filter candle (3), and/or on an element assigned to such end face (6) of the filter candle (3) in axial alignment, and the area of the keying structure as seen from outside is formed behind a seal for the raw water supply area.

2. The water filter device according to claim 1, **characterized in that** a keying structure (4, 5) is formed separately from a fastening structure (12).

3. The water filter device according to claim 1 or 2, **characterized in that** the keying structure (4, 5) is formed as an axial gearing (12).

4. The water filter device according to any of the preceding claims, **characterized in that** the gearing (13) has teeth (15, 16) located In a given angular relationship (14) with one another.

5. The water filter device according to any of the preceding claims, **characterized in that** combined alignment of the teeth of the gearing (13) is provided, turned away from the filter candle (3) and turned toward the filter candle (3).

6. The water filter device according to any of the preceding claims, **characterized in that** a different length and/or size is/are provided for different teeth (15, 16).

7. The water filter device according to any of the preceding claims, **characterized in that** a different number of teeth are provided for different keying variants.

8. The water filter device according to any of the preceding claims, **characterized in that** a different number of teeth are provided in a given angular segment (18) for different keying variants.

9. The water filter device according to any of the preceding claims, **characterized in that** the keying structure (4, 5) is made as an actuator for a filter head component (11).

10. The water filter device according to any of the preceding claims, **characterized in that** the filter head component (11) comprises a valve body (19).

11. The water filter device according to any of the preceding claims, **characterized in that** the valve body (19) comprises at least one inlet valve (8) and/or one outlet valve (9).

12. The water filter device according to any of the preceding claims, **characterized in that** the valve body (19) comprises a relief valve (10) and/or a flush valve (10).

13. The water filter device according to any of the preceding claims, **characterized in that** the valve body (19) has a cam (21) and/or a tappet (22) for a relief valve (10) and/or a flush valve (10).

14. The water filter device according to any of the preceding claims, **characterized in that** the valve body (19) comprises a bypass valve (23).

15. The water filter device according to any of the preceding claims, **characterized in that** a setting device (25) for setting a substream ratio is provided between at least two flow paths (26, 27) of a raw water stream.

16. The water filter device according to any of the preceding claims, **characterized in that** the setting device (25) comprises a raw water distribution member (28) and a substream channel guide member (29) complementary thereto.

## Revendications

1. Dispositif de filtration de l'eau (1), composé d'une tête de filtre (2) avec des composants de tête de filtre (11), d'une bougie filtrante remplaçable (3) avec des composants de bougie filtrante, et d'une structure formant détrompeur (4, 5) réalisée entre un composant de tête de filtre et un composant de bougie filtrante, **caractérisé en ce qu'**une structure formant détrompeur (4) est réalisée sur une face frontale (6) de la bougie filtrante (3) et/ou sur un élément attribué à une telle face frontale (6) de la bougie filtrante (3) dans un alignement axial, et la zone de la structure formant détrompeur, vue de l'extérieur, est réalisée derrière un dispositif d'étanchéité pour la zone de fourniture d'eau brute.

2. Dispositif de filtration de l'eau selon la revendication 1, **caractérisé en ce qu'**une structure formant détrompeur (4, 5) est réalisée séparément d'une structure de fixation (12).

3. Dispositif de filtration de l'eau selon la revendication 1 ou 2, **caractérisé en ce que** la structure formant détrompeur (4, 5) est réalisée comme une denture axiale (12).

4. Dispositif de filtration de l'eau selon l'une quelconque des revendications précédentes, **caractérisé en ce que** la denture (13) présente des dents (15, 16) situées les unes par rapport aux autres dans une relation angulaire donnée (14).

5. Dispositif de filtration de l'eau selon l'une quelconque des revendications précédentes, **caractérisé en ce qu'**un alignement combiné des dents de la denture (13) est prévu, à savoir détourné de la bougie filtrante (3) et tourné vers la bougie filtrante (3).

6. Dispositif de filtration de l'eau selon l'une quelconque des revendications précédentes, **caractérisé en ce qu'**une longueur et/ou une dimension différente(s) est/sont prévue(s) pour différentes dents (15, 16).

7. Dispositif de filtration de l'eau selon l'une quelconque des revendications précédentes, **caractérisé en ce qu'**un nombre différent de dents est prévu pour différentes variantes de détrompeur.

8. Dispositif de filtration de l'eau selon l'une quelconque des revendications précédentes, **caractérisé en ce qu'**un nombre différent de dents est prévu dans un segment angulaire donné (18) pour différentes variantes de détrompeur.

9. Dispositif de filtration de l'eau selon l'une quelconque des revendications précédentes, **caractérisé en ce que** la structure formant détrompeur (4, 5) est réalisée sous forme d'actionneur pour un composant de tête de filtre (11).

10. Dispositif de filtration de l'eau selon l'une quelconque des revendications précédentes, **caractérisé en ce que** le composant de tête de filtre (11) comprend un corps de vanne (19).

11. Dispositif de filtration de l'eau selon l'une quelconque des revendications précédentes, **caractérisé en ce que** le corps de vanne (19) comprend au moins une vanne d'entrée (8) et/ou une vanne de sortie (9).

12. Dispositif de filtration de l'eau selon l'une quelconque des revendications précédentes, **caractérisé en ce que** le corps de vanne (19) comprend une vanne de détente (10) et/ou une vanne de vidange (10).

13. Dispositif de filtration de l'eau selon l'une quelconque des revendications précédentes, **caractérisé en ce que** le corps de vanne (19) présente une came de commande (21) et/ou une came radiale (22) pour une vanne de détente (10) et/ou une vanne de vidange (10).

14. Dispositif de filtration de l'eau selon l'une quelconque des revendications précédentes, **caractérisé en ce que** le corps de vanne (19) comprend une vanne de dérivation (23).

15. Dispositif de filtration de l'eau selon l'une quelconque des revendications précédentes, **caractérisé en ce qu'**un dispositif de réglage (25) pour régler un rapport de courants partiels est fourni entre au moins deux voies de passage (26, 27) d'un courant d'eau brute.

16. Dispositif de filtration de l'eau selon l'une quelconque des revendications précédentes, **caractérisé en ce que** le dispositif de réglage (25) comprend un élément de distribution d'eau brute (28) et un élément de guidage de canal de courant partiel (29) complémentaire à celui-ci.
